# EUROPÄISCHE PATENTSCHRIFT

(11) **EP 0 577 938 B1**
(45) Veröffentlichungstag und Bekanntmachung des Hinweises auf die Patenterteilung: **15.03.2000**
(21) Anmeldenummer: 93106607.0
(22) Anmeldetag: 23.04.1993
(51) Int. Cl.: B61C 3/00, B61C 5/00, B61D 13/00, B61D 3/10

(54) **Gelenktriebwagen im Schienenverkehr**
Articulated powered railcar for railway traffic
Voiture auto-motrice articulée pour trafic ferroviaire

(30) Priorität: 10.07.1992 CH 217692
(43) Veröffentlichungstag der Anmeldung: 12.01.1994
(73) Patentinhaber: STADLER-FAHRZEUGE AG, CH-9565 Bussnang (CH)
(72) Erfinder: Spuhler, Peter, CH-9565 Bussnang (CH)
(74) Vertreter: Blum, Rudolf Emil Ernst

(56) Entgegenhaltungen:
- EP-A- 0 307 343
- BE-A- 358 861
- DE-A- 2 804 826
- DE-C- 465 820
- FR-A- 703 556
- FR-A- 718 744
- FR-A- 743 814

## Beschreibung

Die Erfindung bezieht sich auf einen Gelenktriebwagen zum Einsatz als Schienenfahrzeug gemäss Oberbegriff von Anspruch 1. Nebst Antrieb und Führerstand weist der Triebwagen Platz für Fahrgäste oder Ladegut auf.

Im modernen Schienenverkehr, insbesondere im Nahverkehr, besteht ein steigendes Bedürfnis nach relativ preiswerten Zugeinheiten, welche oft nur aus einem oder einigen wenigen Wagen besteht und welche gegebenenfalls zu grösseren Verbänden gekoppelt werden können. Dies erfordert Triebwagen, die Platz für Fahrgäste oder Ladegut bieten, aber nur eine beschränkte Zugkraft aufzuweisen brauchen.

Viele der herkömmlichen Triebwagen mit Passagierraum bestehen aus einem einzigen starren Wagenkasten, der sowohl Antrieb als auch Passagierraum beinhaltet. Der Passagierraum ist dabei durch die Länge des Wagens beschränkt. Um mehr Passagieren Platz zu bieten, wurden deshalb Gelenktriebwagen mit mehreren, gelenkig verbundenen Wagenkasten entwickelt, wie sie zum Beispiel in der Schweizer Patentschrift CH 673 986 beschrieben sind. In diesen Triebwagen weist in der Regel jeder Wagenkasten einen eigenen Antrieb auf.

Diese herkömmlichen Triebwagen haben verschiedene Nachteile. So benötigen sie meistens mehrere Antriebsdrehgestelle, was zu entsprechend hohen Kosten führt. Ausserdem brauchen die Antriebsdrehgestelle Platz und führen eventuell zu räumlichen Beschränkungen des Passagierraums. Die Lage der Antriebsdrehgestelle unter dem Kasten führt zu erhöhtem Boden und entsprechend hohen Einstiegen. Werden die Antriebsmotoren im Kasten angeordnet, so sind teure, störanfällige Kraftübertragungen nötig.

Weiter ist der Auflagedruck auf den Antriebsdrehgestellen stark von der Beladung des Wagens abhängig, was die Anfahreigenschaften des Triebwagens beeinträchtigt und eine aufwendige Steuerelektronik erforderlich macht.

In den herkömmlichen Lösungen ist die elektrische Ausrüstung ausserdem über den Triebwagen verteilt angeordnet, z.B. im Dach, unter dem Boden oder in Schränken. Dies führt zu grossem Verkabelungsaufwand und erschwert den Unterhalt.

In Lösungen gemäss DE-A-28 04 826 und FR-A-718 744 werden Zugskompositionen aus mehreren untereinander nicht durchgängigen Wagons beschrieben. Einer der Wagons ist als Antriebswagen ausgeführt und umfasst den ganzen Antrieb. Die übrigen Wagons sind Passagierwagen und weisen keinen eigenen Antrieb auf.

Es gibt auch Triebwagen, welche aus mehreren, gelenkig verbundenen, durchgängigen Segmenten bestehen. Beim Triebwagen nach FR-A-743 814 ist der Antrieb, das Antriebsfahrgestell, der Führerstand und ein Einstieg im Mittelsegment vorgesehen, wodurch das Mittelsegment jedoch sehr kompliziert und aufwendig wird. Deshalb sind solche Triebwagen im modernen Schienenverkehr nicht wirtschaftlich.

Es stellt sich nun die Aufgbe, einen Gelenktriebwagen der eingangs genannten Art bereitzustellen, der die Nachteile des Standes der Technik zumindest teilweise vermeidet, einen modularen Aufbau hat und möglichst wirtschaftlich ist.

Diese Anforderungen werden vom erfindungsgemässen Triebwagen, wie er im ersten Patentanspruch beschrieben wird, erfüllt.

Dabei wird der gesamte Antrieb in nur einem Wagenkasten der Triebeinheit konzentriert, der keinen Passagierraum, keinen Führerstand, keinen Einstieg, aber einen Durchgang aufweist, woraus sich viele Vorteile ergeben. Damit wird die Konstruktion der Triebeinheit sehr einfach, ohne dass auf die Vorteile eines durchgängigen Gelenktriebwagens verzichtet werden muss.

Ferner ist nur ein Antrieb und eine Antriebsansteuerung pro Gelenktriebwagen notwendig, was nicht nur die Kosten des Wagens verringert, sondern auch die elektrische Ausrüstung vereinfacht. Die Triebeinheit kann bei Defekten oder zur Wartung als Ganzes einfach ausgetauscht werden. Der Auflagedruck auf das Antriebsgestell, welches die Triebeinheit trägt, wird vor allem durch das Gewicht des Antriebs und nur wenig durch die Beladung des Wagens beeinflusst. Er bleibt damit im wesentlichen immer gleich, was zu verlässlichen Betriebseigenschaften der Antriebsräder (gute Adhäsionsausnützung) führt.

Die Wagenkasten, welche den Passagierraum enthalten, können in Aluminium-Leichtbauweise ausgeführt sein. Damit ergibt sich ein vermindertes Gesamtgewicht und ein geringerer Energieverbrauch beim Anfahren.

Weitere Vorteile des erfindungsgemässen Gelenktriebwagens ergeben sich aus der Beschreibung einer konkreten Ausführung anhand der Zeichnungen.

Dabei zeigt:
Figur 1 eine Seitenansicht des gesamten Triebwagens; und
Figur 2 eine Aufsicht auf den gesamten Triebwagen.

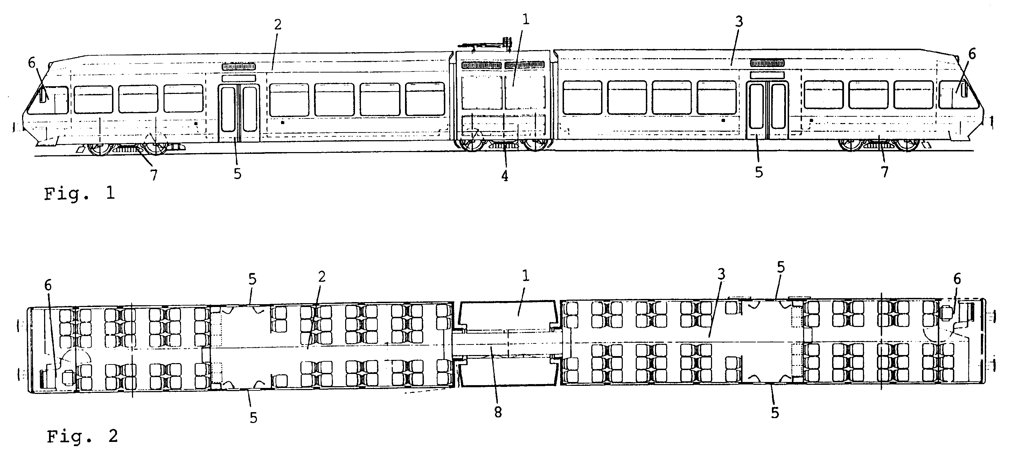

Wie aus den Figuren 1 und 2 ersichtlich wird, besteht der Triebwagen dieser Ausführung aus drei in sich starren Wagenkasten 1, 2, 3, welche über Gelenke verbunden sind. Der Wagenkasten 1 ist als Triebeinheit ausgebildet. Er enthält den Antrieb, welcher im vorliegenden Fall elektrisch ist, und die zugehörigen elektrischen Anlagen. Die Triebeinheit ruht auf einem Drehgestell 4. Dieses Drehgestell ist mit dem Antrieb gekoppelt.

Die Triebeinheit 1 ist zwischen zwei weiteren Wagenkasten angeordnet, den Passagierkasten 2 und 3. Jeder Passagierkasten enthält Sitzplätze für die Passagiere, welche über die Eingänge 5 zugänglich sind, und einen Führerstand 6. Jeder Passagierkasten ruht führerstandseitig auf einem Laufdrehgestell 7, welches keinen Antrieb aufweist, und ist am anderen Ende am Antriebskasten 1 abgestützt.

Mit dieser Konzentration der gesamten Antriebsausrüstung auf den mittleren Wagenkasten 1 kann ein komplettes Triebdrehgestell samt der dazu nötigen Motoren und Leistungselektronik eingespart werden. Beim Einsatz als Alleinfahrer ohne Lokomotivaufgaben und der sich daraus ergebenden weitgehenden Längskräftefreiheit der beiden Passagierwagenkasten 2 und 3 können diese in Leichtbauweise ausgeführt werden, was wiederum die Basis für den Verzicht auf ein weiteres Triebdrehgestell bildet. Dies führt zu erheblichen Einsparungen. Ausserdem ergeben sich für die Reserveteilhaltung Vorteile, da in der Regel nur ein Antriebsteil 1 an Lager gehalten werden muss.

Im vorliegenden Ausführungsbeispiel wird ein elektrischer Antrieb verwendet. Der modulare Aufbau mit der klaren Trennung von Passagierraum 2 und 3 und Triebeinheit 1 erlaubt es aber, mögliche Variationen der Traktionsausrüstung auf einen kleinen Teil des Gelenktriebwagens zu beschränken und den Rest unverändert zu übernehmen, was grosse Kosteneinsparungen erlaubt. So können zum Beispiel Antriebsteile für Wechselstrom, Gleichstrom, mit dieselelektrischer oder mit dieselhydraulischer Kraftübertragung leicht untereinander ausgetauscht werden.

Alle elektrischen und mechanischen Ausrüstungskomponenten am Antriebsteil 1 sind über Wartungsklappen von aussen (Hubstapler) oder innen (Servicepersonal) zugänglich, was gegenüber konventionellen Lösungen keinerlei Zusatzinvestitionen für den Unterhalt nötig macht. Dies im Gegensatz zu Fahrzeugen mit Dachausrüstungen, welche meistens nicht unerhebliche werkstattseitige Zusatzinvestitionen erforderlich machen.

Im Gegensatz zum Mittelkasten 1 sind die Passagierkasten 2, 3 vorzugsweise in Aluminiumbauweise ausgeführt. Da in diesen Kasten keine grossen Einbauten, Durchbrüche und schwere Lasten vorgesehen sind, kann eine kostengünstige Kombination aus Grossprofiltechnik und einem Schraubensystem verwendet werden. Zusammengeschweisste Grossprofile kommen insbesondere an den Untergestellen bis zu den Fensterunterkanten zum Einsatz, das Schraubensystem wird für die Fensterpfosten und die Dachpartien verwendet. Die beiden Frontpartien weisen im Unterteil einen massiven, geschweissten Querträger auf, welcher einerseits als Kupplungsträger dient, andererseits seitliche Ramm-/Stossverzehrbalken trägt.

Dank den kurzen Passagierkastenteilen bis zu den beiden Gelenken ist eine Kastenverbreiterung und daher bei Normalspur eine "3+2-Bestuhlung" möglich, was zu erhöhtem Sitzangebot führt.

Die Passagierabteile können in Niederflurbauweise ausgeführt werden. Insbesondere im Türbereich 5 kann der Boden sehr tief liegen, was ein bequemes Einsteigen erlaubt. Lediglich über den Laufdrehgestellen 7 und im Durchgang 5 muss der Boden erhöht werden.

Sowohl für das Triebdrehgestell 4 wie auch für die Laufdrehgestelle 7 der Passagierkasten 2, 3 können in einer kostengünstigen Ausführung übliche Konstruktionen verwendet werden. Sie sollten, um vor allem das Gewicht und die Bodenhöhe klein zu halten, relativ kleine Räder und kurzen Radabstand aufweisen.

Die Kupplungen können mechanisch mit bestehendem Rollmaterial kompatibel ausgeführt werden. Für die Vielfachsteuerung, zur Steuerung von mehreren gekuppelten Gelenktriebwagen von einem Führerstand aus, ist aus Kostengründen ein Mehrfachstecker vorgesehen, wobei auch vollautomatische Kupplungen anwendbar sind.

Die Kupplungen sind auf Zerstörungsgliedern montiert, welche zusammen mit dem Federpaket eine hohe Energieaufnahme bei Kollisionen und Stössen garantieren. Seitliche Schockabsorberbalken sind als Schutz gegen Autokollisonen eingebaut und auf sich regenerierenden Elastomerelementen befestigt. Damit wird die Fahrzeugzelle wirksam vor Deformation geschützt.

Zwischen den drei Wagenkasten 1, 2 und 3 erfolgen die elektrischen und die pneumatischen Verbindungen allesamt mit Steckverbindungen bzw. Schnellkupplungen. Dies ermöglicht einen einfachen Austausch der einzelnen Wagenkasten.

Selbstverständlich ist der in den Figuren 1 und 2 gezeigte Gelenktriebwagen nicht die einzige mögliche Ausführung der Erfindung. So ist es zum Beispiel möglich, dass die Passagierwagenkasten (2, 3) noch weitere Gelenke enthalten, so dass der Triebwagen mehr als drei starre Wagenkasten aufweist, von denen einer als Trieb-einheit einheit ausgebildet ist und die anderen zur Aufnahme von Passagieren oder Ladegut vorgesehen sind. Auch kann zum Beispiel bedarfsweise einer oder beide der Führerstände entfallen. Auch können Schleusen vorgesehen sein, die bei Mehrfachtraktion ermöglichen, zwischen einzelnen Triebwagen hin- und herzugehen.

Insgesamt ergibt sich durch die Konzentration aller Steuerungs- und Antriebsaggregate auf den Passagierraum-freien Mittelkasten 1 über dem Triebdrehgestell eine starke Vereinfachung des Aufbaus und der Wartung. Fallen Teile von Antrieb oder Steuerung aus, so wird nicht der gesamte Gelenktriebwagen ausser Betrieb gesetzt, indem lediglich der Mittelteil 1 ausgetauscht werden muss. Dies erhöht die Verfügbarkeit des Gelenktriebwagens erheblich.

## Patentansprüche

1. Gelenktriebwagen zum Einsatz als Schienenfahrzeug mit drei gelenkig untereinander verbundenen Abschnitten (1,2,3), von denen ein mittlerer als Triebeinheit (1) und die äusseren, als antriebslose Passagierkasten (2,3) ausgeführt sind, wobei die Triebeinheit (1) eine Antriebssteuerung, einen Antrieb, genau ein von diesem angetriebenes Antriebsfahrgestell (4) aber keine Sitzplätze für Passagiere aufweist und wobei der Gelenktriebwagen Einstiege (5) aufweist, welche alle in den Passagierkasten (2,3) angeordnet sind, dadurch gekennzeichnet, dass die Triebeinheit (1) einen Durchgang (8) als Passage zwischen den Passagierkasten (2,3) aufweist und dass der Gelenktriebwagen mindestens einen, in einem der Passagierkasten angeordneten Führerstand (6) aufweist.

2. Gelenktriebwagen nach Anspruch 1, dadurch gekennzeichnet, dass die Passagierkasten (2,3) Drehgestelle (7) ohne Antrieb aufweisen.

3. Gelenktriebwagen nach einem der vorangehenden Ansprüche, dadurch gekennzeichnet, dass jeder der Passagierkasten (2,3) einen Führerstand (6) aufweist.

4. Gelenktriebwagen nach einem der vorangehenden Ansprüche, dadurch gekennzeichnet, dass die Triebeinheit (1) zum Austausch von den anderen Wagenkasten (2,3) trennbar ist.

5. Gelenktriebwagen nach einem der vorangehenden Ansprüche, dadurch gekennzeichnet, dass der Antrieb der Triebeinheit (1) elektrisch ist und dass die Triebeinheit (1) die für den Antrieb nötige Leistungselektronik und einen Stromabnehmer aufweist.

6. Gelenktriebwagen nach einem der vorangehenden Ansprüche, dadurch gekennzeichnet, dass die Passagierkasten (2,3) in Aluminium-Leichtbauweise ausgeführt sind.

7. Gelenktriebwagen nach einem der vorangehenden Ansprüche, dadurch gekennzeichnet, dass er in Niederflurbauweise ausgeführt ist und dass der Boden nur über den Laufdrehgestellen (7) der Passagierkasten (2,3) und im Durchgang (8) erhöht ist.

8. Gelenktriebwagen nach einem der vorangehenden Ansprüche, dadurch gekennzeichnet, dass mehrere der Gelenktriebwagen kuppelbar und dass die Antriebe aller Triebeinheiten von einem Führerstand steuerbar sind.

9. Gelenktriebwagen nach einem der vorangehenden Ansprüche, dadurch gekennzeichnet, dass die Passagierkasten (2,3) eine 2+3-Bestuhlung aufweisen.

10. Gelenktriebwagen nach einem der vorangehenden Ansprüche, dadurch gekennzeichnet, dass die Triebeinheit (1) fensterlos ist.

## Claims

1. Articulated rail car for the use as rail vehicle with three sections (1,2,3) mutually joined in articulated manner, of which a middle one is built as power unit (1) and the exterior ones are built as seating compartments (2,3) without drive, whereby the power unit (1) comprises a drive control unit, a drive, exactly one running gear (4) driven by the same but no seats for passengers, and whereby the articulated rail car comprises entrances (5), which are all located in the seating compartments (2,3), characterised in that the power unit (1) comprises a passageway (8) as passage between the seating compartments (2,3) and that the articulated rail car comprises at least one driver's cab (6) that is located in one of the seating compartments.

2. Articulated rail car according to claim 1, characterised in that the seating compartments (2,3) comprise bogies (7) without drive.

3. Articulated rail car according to one of the preceding claims, characterised in that each of the seating compartments (2,3) comprises a driver's cab (6).

4. Articulated rail car according to one of the preceding claims, characterised in that the power unit (1) is separable from the other compartments (2,3) for exchange.

5. Articulated rail car according to one of the preceding claims, characterized in that the drive of the power unit (1) is electric and that the power unit (1) comprises the power electronics needed for the drive and a current collector.

6. Articulated rail car according to one of the preceding claims, characterised in that the seating compartments (2, 3) are built as lightweight aluminium construction.

7. Articulated rail car according to one of the preceding claims, characterised in that it is built as low-platform construction and that the floor is elevated only above the bogies (7) of the seating compartments (2,3) and in the passageway (8).

8. Articulated rail car according to one of the preceding claims, characterised in that several of the articulated rail cars can be coupled and that the drives of all power units are controllable from one driver's cab.

9. Articulated rail car according to one of the preceding claims, characterised in that the seating compartments (2,3) have a 2+3 seating.

10. Articulated rail car according to one of the preceding claims, characterised in that the power unit (1) has no windows.

## Revendications

1. Véhicule automoteur articulé, destiné à être utilisé comme véhicule ferroviaire, comprenant trois voitures (1, 2, 3) reliées les unes aux autres de manière articulée, parmi lesquelles l'une des voitures au centre est réalisée en tant qu'unité motrice (1), et les voitures extérieures sont réalisées en tant que voitures de passagers (2, 3) dépourvues de propulsion, l'unité motrice (1) comprenant une commande de moteur, un moteur, exactement un bogie moteur entraîné par celui-ci, mais aucune place assise pour des passagers, et ledit véhicule automoteur articulé comporte des entrées (5), lesquelles sont toutes agencées dans les voitures de passagers (2, 3), caractérisé en ce que l'unité motrice (1) comporte une traversée (8) à titre de passage entre les voitures de passagers (2, 3), et en ce que le véhicule automoteur articulé comprend au moins un poste de conduite (6), agencé dans l'une des voitures de passagers.

2. Véhicule automoteur articulé selon la revendication 1, caractérisé en ce que les voitures de passagers (2, 3) présentent des bogies (7) dépourvus de propulsion.

3. Véhicule automoteur articulé selon l'une des revendications précédentes, caractérisé en ce que chacune des voitures de passagers (2, 3) présente un poste de conduite (6).

4. Véhicule automoteur articulé selon l'une des revendications précédentes, caractérisé en ce que l'unité motrice (1) est séparable des autres voitures (2, 3) en vue d'être échangée.

5. Véhicule automoteur articulé selon l'une des revendications précédentes, caractérisé en ce que la propulsion de l'unité motrice (1) est électrique, et en ce que l'unité motrice (1) comprend l'électronique de puissance nécessaire pour la propulsion et un capteur de courant.

6. Véhicule automoteur articulé selon l'une des revendications précédentes, caractérisé en ce que les voitures de passagers (2, 3) sont réalisées en construction légère en aluminium.

7. Véhicule automoteur articulé selon l'une des revendications précédentes, caractérisé en ce qu'il est réalisé selon une construction à châssis surbaissé, et en ce que le plancher est surélevé uniquement au-dessus des emplacements des bogies (7) des voitures de passagers (2, 3) et dans la traversée (8).

8. Véhicule automoteur articulé selon l'une des revendications précédentes, caractérisé en ce que plusieurs véhicules automoteurs sont susceptibles d'être accouplés, et en ce que les moteurs de toutes les unités motrices sont susceptibles d'être commandés depuis un poste de conduite.

9. Véhicule automoteur articulé selon l'une des revendications précédentes, caractérisé en ce que les voitures de passagers (2, 3) comprennent des sièges suivant une disposition "2 + 3".

10. Véhicule automoteur articulé selon l'une des revendications précédentes, caractérisé en ce que l'unité motrice (1) est dépourvue de fenêtre.
